# EUROPEAN PATENT APPLICATION

(11) **EP 4 462 504 A1**
(43) Date of publication of application: **13.11.2024**
(21) Application number: 24173743.6
(22) Date of filing: 02.05.2024
(51) Int. Cl.: H01M 4/36, H01M 4/587, H01M 4/133, H01M 10/0525, H01G 11/50, H01G 11/28, H01G 11/32

(54) **ELECTROCHEMICAL APPARATUS AND ELECTRONIC APPARATUS**

(30) Priority: 05.05.2023 CN 202310494999
(71) Applicant: Ningde Amperex Technology Ltd., Ningde City, Fujian 352100 (CN)
(72) Inventor: TAO, Wei, Ningde City, Fujian Province, People s Republic of China, 352100 (CN); CHEN, Yusheng, Ningde City, Fujian Province, People s Republic of China, 352100 (CN)
(74) Representative: Icosa

(57) **Abstract**

An electrochemical apparatus includes a negative electrode plate, where the negative electrode plate includes a negative electrode current collector, a first layer, and a second layer, and the first layer is located between the negative electrode current collector and the second layer. Both the first layer and the second layer include graphite; a thermal decomposition temperature of the graphite in the first layer is A, and A is greater than or equal to 800°C; a thermal decomposition temperature of the graphite in the second layer is B, and B ranges from 500°C to 700°C; and 100°C ≤ A - B ≤ 500°C.

## Description

### FIELD

This application relates to the field of electrochemical energy storage, and specifically, to an electrochemical apparatus and an electronic apparatus.

### BACKGROUND

With the development of electrochemical energy storage technologies, increasingly high requirements are imposed on energy density, kinetic performance, and cycling performance of electrochemical apparatuses (for example, lithium-ion batteries). Typically, it is difficult to achieve a balance between the energy density and kinetic performance of electrochemical apparatuses. Improving the charge capacity and charge speed of negative electrode active materials can easily lead to a low gram capacity of the negative electrode active materials. Therefore, further improvements in this aspect are expected.

### SUMMARY

This application provides an electrochemical apparatus. The electrochemical apparatus includes a negative electrode plate, where the negative electrode plate includes a negative electrode current collector, a first layer, and a second layer, and the first layer is located between the negative electrode current collector and the second layer. Both the first layer and the second layer include graphite; a thermal decomposition temperature of the graphite in the first layer is A, and the thermal decomposition temperature A of the graphite in the first layer is greater than or equal to 800°C; and a thermal decomposition temperature of the graphite in the second layer is B, the thermal decomposition temperature B of the graphite in the second layer ranges from 500°C to 700°C, and 100°C ≤ A - B ≤ 500°C.

In some embodiments, A and B satisfy 100°C < A - B < 450°C. In some embodiments, further, the thermal decomposition temperature A of the graphite in the first layer ranges from 900°C to 1000°C. In some embodiments, A and B satisfy 200°C ≤ A - B ≤ 400°C. In some embodiments, further, the thermal decomposition temperature B of the graphite in the second layer ranges from 500°C to 650°C, and A and B satisfy 100°C ≤ A - B ≤ 400°C. In some embodiments, a ratio of a thickness of the second layer to a thickness of the first layer ranges from 0.1 to 1. In some embodiments, a ratio of a thickness of the second layer to a thickness of the first layer ranges from 0.25 to 0.67. In some embodiments, the graphite in the second layer exhibits two decomposition characteristic peaks between 600°C and 900°C in a thermogravimetric test. In some embodiments, the graphite in the first layer exhibits one decomposition characteristic peak between 800°C and 900°C in a thermogravimetric test.

An embodiment of this application further provides an electronic apparatus including the foregoing electrochemical apparatus.

In this application, the thermal decomposition temperature A of the graphite in the first layer and the thermal decomposition temperature B of the graphite in the second layer are designed, where A is greater than or equal to 800°C, B ranges from 500°C to 700°C, and 100°C ≤ A - B ≤ 500°C. This improves the kinetic performance of the electrochemical apparatus to prevent lithium precipitation while obtaining high energy density, thereby ensuring high cycling performance of the electrochemical apparatus.

### BRIEF DESCRIPTION OF DRAWINGS

Figure shows a cross-sectional view of a negative electrode plate along a width direction according to some embodiments.

### DETAILED DESCRIPTION

The following embodiments may allow persons skilled in the art to understand this application more comprehensively, but impose no limitation on this application in any manner.

Some embodiments of this application provide an electrochemical apparatus. The electrochemical apparatus includes a negative electrode plate. In some embodiments, the negative electrode plate includes a negative electrode current collector 110, a first layer 111, and a second layer 112, and the first layer 111 is located between the negative electrode current collector 110 and the second layer 112. In some embodiments, the first layer 111 and the second layer 112 (as shown in Figure) may be present on one side of the negative electrode current collector 110, or the first layer 111 and the second layer 112 (not shown) may be present on both sides of the negative electrode current collector 110.

In some embodiments, both the first layer 111 and the second layer 112 include graphite. In some embodiments, a thermal decomposition temperature of the graphite in the first layer 111 is A, and a thermal decomposition temperature of the graphite in the second layer 112 is B. Graphite with a low thermal decomposition temperature has high activity, and kinetic performance of the graphite is correspondingly improved. The high activity leads to an increase in reaction sites, which in turn increases side reactions, resulting in a low gram capacity of the graphite. On the contrary, graphite with a high thermal decomposition temperature has a high gram capacity but relatively low kinetic performance.

In some embodiments, A > 800°C, 500°C < B < 700°C, and 100°C < A - B ≤ 500°C. If the thermal decomposition temperature A of the graphite in the first layer 111 is too low, energy density of the electrochemical apparatus is adversely affected. If the thermal decomposition temperature B of the graphite in the second layer 112 is too low, kinetic performance of the graphite in the second layer 112 is too high, and more side reactions occur, resulting in poor cycling performance of the electrochemical apparatus. If the thermal decomposition temperature B of the graphite in the second layer 112 is too high, kinetic performance of the graphite in the second layer 112 is poor, resulting in lithium precipitation on a surface of a negative electrode plate during cycling. This can lead to a rapid decline in cycling performance, resulting in poor cycling performance of the electrochemical apparatus.

In some embodiments, if (A - B) is too small, for example, less than 100°C, a difference between the thermal decomposition temperature B of the graphite in the second layer 112 and the thermal decomposition temperature A of the graphite in the first layer 111 is relatively small, and the effect of the second layer 112 on improving kinetic performance and cycling performance of the negative electrode plate is not significant. If (A - B) is too large, for example, greater than 500°C, the difference between the thermal decomposition temperatures of the graphite in the first layer 111 and the graphite in the second layer 112 is too large, that is, the difference in structural properties of the graphite in the first layer 111 and the graphite in the second layer 112 is too large, which is not conducive to the overall structural stability of the first layer 111 and the second layer 112, and thus not conducive to the improvement of kinetic performance and cycling performance of the negative electrode plate.

In some embodiments, the thermal decomposition temperature A of the graphite in the first layer ranges from 800°C to 1000°C. In this way, the kinetic performance and cycling performance can both be guaranteed. If the thermal decomposition temperature of the graphite is too high, the requirements for materials and processes are further increased, which increases the costs and provides limited improvement to the cycling performance and energy density.

In some embodiments, the thermal decomposition temperature A of the graphite in the first layer ranges from 800°C to 900°C. This is less demanding on manufacturing, can reduce the costs, and can also meet the requirements for kinetic performance and cycling performance.

In some embodiments, A and B satisfy 100°C < A - B < 450°C. The first layer 111 and the second layer 112 exhibits strong overall structural stability, further improving the kinetic performance and cycling performance of the negative electrode plate.

Further, in some embodiments, in a case that A and B satisfy 100°C ≤ A - B ≤ 450°C, the thermal decomposition temperature A of the graphite in the first layer 111 is 900°C to 1000°C. If the thermal decomposition temperature A of the graphite in the first layer 111 is too high, the requirements for manufacturing are high, which increases the manufacturing costs. If the thermal decomposition temperature A of the graphite in the first layer 111 is too low, energy density of the electrochemical apparatus is adversely affected, and kinetic performance of the first layer 111 is too high, leading to more severe side reactions in both the first layer 111 and the second layer 112.

In some embodiments, 100°C < A - B < 450°C. In this way, the first layer 111 and the second layer 112 exhibits strong overall structural stability, improving the kinetic performance and cycling performance of the negative electrode plate.

In some embodiments, 200°C < A - B < 400°C. In this case, the second layer 112 is conducive to improving the kinetic performance of the negative electrode plate, and the first layer 111 is conducive to increasing the energy density of the negative electrode plate, thereby ensuring that the electrochemical apparatus has high energy density and good cycling performance. In addition, the overall structural stability of the negative electrode plate will not be affected due to significant structural difference between the first layer 111 and the second layer 112.

Further, in some embodiments, the thermal decomposition temperature B of the graphite in the second layer 112 ranges from 500°C to 650°C, and A and B satisfy 100°C ≤ A - B ≤ 400°C. If the thermal decomposition temperature B of the graphite in the second layer 112 is too low, kinetic performance of the graphite in the second layer 112 is too high, and more side reactions occur, resulting in poor cycling performance of the electrochemical apparatus. If the thermal decomposition temperature B of the graphite in the second layer 112 is too high, the effect in improving the kinetic performance of the negative electrode plate is relatively limited. In some embodiments, in a case that the thermal decomposition temperature B of the graphite in the second layer 112 ranges from 500°C to 650°C and A and B satisfy 100°C ≤ A - B ≤ 400°C, the second layer 112 has good kinetic performance, which can prevent lithium precipitation, thereby ensuring good cycling performance for the electrochemical apparatus and preventing the rapid decline in cycling performance.

In some embodiments, a ratio of a thickness of the second layer 112 to a thickness of the first layer 111 is 0.1 to 1. If the ratio of the thickness of the second layer 112 to the thickness of the first layer 111 is too small, the thickness of the second layer 112 may be too small, affecting the coating of the second layer 112. If the ratio of the thickness of the second layer 112 to the thickness of the first layer 111 is too large, the overall energy density of the negative electrode plate is adversely affected. In some embodiments, a ratio of a thickness of the second layer 112 to a thickness of the first layer 111 is 0.25 to 0.67. In this case, the negative electrode plate can obtain high energy density, and still achieve high kinetic performance and cycling performance. In some embodiments, a ratio of a thickness of the second layer 112 to a thickness of the first layer 111 is 0.25 to 0.43. This can further optimize the energy density, kinetic performance, and cycling performance of the electrochemical apparatus.

In some embodiments, the graphite in the second layer 112 exhibits two decomposition characteristic peaks between 600°C and 900°C in a thermogravimetric test. This indicates that the graphite experiences two decompositions between 600°C and 900°C. In some embodiments, the graphite in the first layer 111 exhibits one decomposition characteristic peak between 800°C and 900°C in a thermogravimetric test. In this application, the thermogravimetric test method is: performing heat treatment on the negative electrode plate in air at a temperature of 450°C for 2 hours to obtain a negative electrode active material; after cooling, separately scraping powder from the first layer 111 and the second layer 112; subjecting the negative electrode active material with powder scraped to a thermogravimetric test, where the thermogravimetric test is conducted in an air atmosphere with a temperature rise speed of 5 °C/min; and recording the actual quality change and the temperature value corresponding to the characteristic peak.

In some embodiments, the graphite in the first layer 111 includes at least one selected from the group consisting of artificial graphite and natural graphite. In some embodiments, the graphite in the second layer 112 includes at least one selected from the group consisting of artificial graphite and natural graphite. In some embodiments, both the first layer 111 and the second layer 112 include artificial graphite and a binder. In some embodiments, the first layer 111 and the second layer 112 may each independently include a silicon-based material. In some embodiments, the silicon-based material includes at least one of silicon, a silicon-oxygen material, a silicon-carbon material, or a silicon-oxygen-carbon material.

In some embodiments, the negative electrode current collector 110 may be at least one of a copper foil, a nickel foil, or a carbon-based current collector. In some embodiments, both the first layer 111 and the second layer 112 may include a conductive agent and a binder. In some embodiments, the conductive agents in the first layer 111 and the second layer 112 may each include at least one of conductive carbon black, Ketjen black, laminated graphite, graphene, carbon nanotubes, or carbon fibers. In some embodiments, the binders in the first layer 111 and the second layer 112 may each include at least one of carboxymethyl cellulose (CMC), polyacrylic acid, polyvinyl pyrrolidone, polyaniline, polyimide, polyamide-imide, polysiloxane, styrene-butadiene rubber, epoxy resin, polyester resin, polyurethane resin, or polyfluorene. In some embodiments, a mass percentage of the graphite in the first layer 111 is 90% to 98%. In some embodiments, a mass percentage of the graphite in the second layer 112 ranges from 90% to 98%. In some embodiments, a mass ratio of the graphite, the binder, and a dispersant in the first layer 111 may be (90-98):(0.2-5.6):(1.8-5.4). In some embodiments, a mass ratio of the graphite, the binder, and a dispersant in the second layer 112 may be (90-98):(0.2-5.6):(1.8-5.4). It should be understood that the ratios of components in the first layer 111 and the second layer 112 mentioned above are merely examples, and any other suitable mass ratio can be used. In addition, sometimes the conductive agent may be omitted.

In some embodiments, the electrochemical apparatus may further include a positive electrode plate and a separator, where the separator is disposed between the positive electrode plate and the negative electrode plate to provide separation.

In some embodiments, the positive electrode plate includes a positive electrode current collector and a positive electrode active material layer, where the positive electrode active material layer is located on one side or two sides of the positive electrode current collector. In some embodiments, the positive electrode current collector may be an aluminum foil, and certainly may be other positive electrode current collectors commonly used in the art. In some embodiments, a thickness of the positive electrode current collector may be 5 µm to 30 µm.

In some embodiments, the positive electrode active material layer may include a positive electrode active material, a conductive agent, and a binder. In some embodiments, the positive electrode active material may include at least one of lithium cobalt oxide, lithium iron phosphate, lithium aluminate, lithium manganate oxide, or lithium nickel cobalt manganate. In some embodiments, the conductive agent of the positive electrode active material layer may include at least one of conductive carbon black, laminated graphite, graphene, or carbon nanotubes. In some embodiments, the binder in the positive electrode active material layer may include at least one of polyvinylidene fluoride, vinylidene fluoride-hexafluoropropylene copolymer, styrene-acrylate copolymer, styrene-butadiene copolymer, polyamide, polyacrylonitrile, polyacrylic ester, polyacrylic acid, polyacrylate, sodium carboxymethyl cellulose, polyvinyl acetate, polyvinylpyrrolidone, polyvinyl ether, polymethyl methacrylate, polytetrafluoroethylene, or polyhexafluoropropylene. In some embodiments, a mass ratio of the positive electrode active material, the conductive agent, and the binder in the positive electrode active material layer is (90-99):(0.5-5):(0.5-5). However, this is merely an example and any other suitable mass ratio can be used.

In some embodiments, the separator includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect in preventing short circuits, and can improve stability of a battery through a shutdown effect. In some embodiments, a thickness of the separator ranges from approximately 3 µm to 20 µm.

In some embodiments, a surface of the separator may further include a porous layer. The porous layer is disposed on at least one surface of a substrate of the separator. The porous layer includes inorganic particles and the binder. The inorganic particles are selected from at least one of aluminum oxide (Al₂O₃), silicon oxide (SiO₂), magnesium oxide (MgO), titanium oxide (TiO₂), hafnium dioxide (HfO₂), tin oxide (SnO₂), ceria oxide (CeO₂), nickel oxide (NiO), zinc oxide (ZnO), calcium oxide (CaO), zirconia oxide (ZrO₂), yttrium oxide (Y₂O₃), silicon carbide (SiC), boehmite, aluminum hydroxide, magnesium hydroxide, calcium hydroxide, or barium sulfate. In some embodiments, a pore diameter of the separator ranges from approximately 0.01 µm to 1 µm. The binder in the porous layer is selected from at least one of polyvinylidene fluoride, vinylidene fluoride-hexafluoropropylene copolymer, polyamide, polyacrylonitrile, polyacrylic ester, polyacrylic acid, polyacrylate, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments, the electrochemical apparatus includes a lithium-ion battery. However, this application is not limited thereto. In some embodiments, the electrochemical apparatus further includes an electrolyte, where the electrolyte includes at least one of fluoroether, fluoroethylene carbonate, or ether nitrile. In some embodiments, the electrolyte further includes a lithium salt, where the lithium salt includes lithium bis(fluorosulfonyl)imide and lithium hexafluorophosphate, and a concentration of the lithium salt is 1 mol/L to 2 mol/L. In some embodiments, the electrolyte may further include a non-aqueous solvent. The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

Examples of the linear carbonate compound are diethyl carbonate (DEC), dimethyl carbonate (DMC), dipropyl carbonate (DPC), methyl propyl carbonate (MPC), ethyl propyl carbonate (EPC), methyl ethyl carbonate (MEC), or a combination thereof. Examples of the cyclic carbonate compound are ethylene carbonate (EC), propylene carbonate (PC), butylene carbonate (BC), vinyl ethylene carbonate (VEC), or a combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

Examples of the carboxylate compound are methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

Example of the ether compound are dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

Examples of the another organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

An embodiment of this application further provides an electronic apparatus including the foregoing electrochemical apparatus. The electronic apparatus in this embodiment of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a drone, a lighting appliance, a toy, a game console, a clock, an electric tool, a flash lamp, a camera, a large household battery, a lithium-ion capacitor, and the like.

Some specific examples and comparative examples are listed below to better illustrate this application. Lithium-ion batteries are used for illustration.

### Example 1

Preparation of negative electrode plate: A negative electrode active material artificial graphite, a binder styrene-butadiene rubber, and sodium carboxymethyl cellulose were dissolved in deionized water at a weight ratio of 98:1:1 to produce a first slurry. A thermal decomposition temperature A of the artificial graphite in the first slurry was 800°C. A copper foil with a thickness of 6 µm was used as a negative electrode current collector. The first slurry was applied on both sides of the negative electrode current collector to obtain a first layer. A negative electrode active material artificial graphite, a binder styrene-butadiene rubber, and sodium carboxymethyl cellulose were dissolved in deionized water at a weight ratio of 98:1:1 to produce a second slurry. A thermal decomposition temperature B of the artificial graphite in the second slurry was 500°C. The second slurry was applied on the first layer to obtain a second layer. After drying, cold pressing, and slitting, a negative electrode plate was obtained.

Preparation of positive electrode plate: A positive electrode active material lithium cobalt oxide, a conductive agent conductive carbon black, and a binder polyvinylidene fluoride (PVDF) were dissolved in an N-methylpyrrolidone (NMP) solution at a weight ratio of 94.8:2.8:2.4, to produce a positive electrode slurry. An aluminum foil with a thickness of 8 µm was used as a positive electrode current collector. The positive electrode slurry was applied on both sides of the positive electrode current collector with a coating thickness of 80 µm. After drying, cold pressing, and slitting, a positive electrode plate was obtained.

Preparation of separator: Polyethylene (PE) with a thickness of 8 µm was used as a separator substrate; two sides of the separator substrate were each coated with a 2 µm alumina ceramic layer, and finally, the two sides coated with the ceramic layer were each coated with 2.5 mg/1540.25 mm² of binder polyvinylidene fluoride (PVDF), followed by drying.

Preparation of electrolyte: In an environment with a water content less than 10 ppm, lithium hexafluorophosphate and a non-aqueous organic solvent (with ethylene carbonate (EC), diethyl carbonate (DEC), propylene carbonate (PC), propyl propionate (PP), and vinylene carbonate (VC) at a mass ratio of 20:30:20:28:2) were mixed to prepare an electrolyte with a lithium salt concentration of 1.15 mol/L.

Preparation of lithium-ion battery: The positive electrode plate, the separator, and the negative electrode plate were stacked in sequence, such that the separator was disposed between the positive electrode plate and the negative electrode plate for separation, and the stack was wound to obtain an electrode assembly. The electrode assembly was placed into an outer package aluminum-plastic film, and was dehydrated at a temperature of 80°C. Then the above-mentioned electrolyte was injected and packaging was performed, followed by processes such as formation, degassing, and shaping, to obtain a lithium-ion battery.

The differences between Comparative examples 1 to 6 and Examples 1 to 14 lie in the thermal decomposition temperature A of the graphite in the first layer, the thermal decomposition temperature B of the graphite in the second layer, and the thickness of the first layer and/or the thickness of the second layer. Other parameters are the same as those in Example 1. For details, refer to Table 1.

In addition, in this application, the following methods were used to measure corresponding parameters.

### Volumetric energy density test:

At 25°C, a lithium-ion battery was charged to 4.45 V at 3C, then left standing for 30 minutes, discharged to 3 V at 1C, and left standing for 10 minutes. This process was repeated. After 1000 cycles, the energy density of the lithium-ion battery was calculated using the capacity and volume of the lithium-ion battery, where the volume of the lithium-ion battery = length × width × thickness.

The capacity of lithium-ion battery was measured as follows: At 25°C, the lithium-ion battery was directly charged to a rated voltage at a constant current of 0.5C, charged at a constant voltage until the current drops to 0.02C, left standing for 30 minutes, and then discharged at a constant current of 0.2C until the voltage reached 3 V.Capacity of the battery = ∫I × Vdt, where V was the real-time voltage. Energy density =Capacity of the battery/volume, where the volume of the battery = 5.0 mm × 80 mm × 61 mm.

### Lithium precipitation test:

At 25°C, a lithium-ion battery was charged at a constant current of 3C or 4C separately until the voltage was increased to the rated voltage of 4.45 V. Then, the lithium-ion battery was charged at a constant voltage until the current was reduced to 0.02C, and left standing for 20 minutes. The lithium-ion battery was disassembled, and a negative electrode interface after full charge was observed to obtain the lithium precipitation situation at 3C or 4C.

### Cycling test:

At 25°C, a lithium-ion battery was charged at a constant current of 3C until the voltage was increased to the rated voltage of 4.45 V. Then, the lithium-ion battery was charged at a constant voltage until the current was reduced to 0.02C, and left standing for 20 minutes. Then, the lithium-ion battery was discharged at 1C until the voltage was reduced to 3 V, and an actual discharge capacity at that time was recorded as D1. The foregoing process was repeated for 1000 cycles, and the capacity of each discharge Dn was recorded, where cycling capacity retention rate = Dn/D1.

Table 1 shows parameters and evaluation results of Examples 1 to 14 and Comparative examples 1 to 6.

**Table 1**

| | B (°C) | Thickness of second layer (µm) | A (°C) | Thickness of first layer (µm) | Ratio of thickness of second layer to thickness of first layer | A-B (°C) | Lithium precipitation at 3C | Lithium precipitation at 4C | Energy density (Wh/L) | Cycling capacity retention rate at 3C |
|---|---|---|---|---|---|---|---|---|---|---|
| Example 1 | 500 | 10 | 800 | 40 | 0.25 | 300 | No lithium precipitation | No lithium precipitation | 740 | 85% |
| Example 2 | 550 | 10 | 900 | 40 | 0.25 | 350 | No lithium precipitation | No lithium precipitation | 750 | 87% |
| Example 3 | 600 | 10 | 800 | 40 | 0.25 | 200 | No lithium precipitation | No lithium precipitation | 745 | 85% |
| Example 4 | 650 | 10 | 900 | 40 | 0.25 | 250 | No lithium precipitation | No lithium precipitation | 751 | 89% |
| Example 5 | 700 | 10 | 800 | 40 | 0.25 | 100 | No lithium precipitation | No lithium precipitation | 747 | 84% |
| Example 6 | 650 | 10 | 1000 | 40 | 0.25 | 350 | No lithium precipitation | No lithium precipitation | 760 | 85% |
| Example 7 | 550 | 10 | 1000 | 40 | 0.25 | 450 | No lithium precipitation | No lithium precipitation | 752 | 83% |
| Example 8 | 600 | 10 | 950 | 40 | 0.25 | 350 | No lithium precipitation | No lithium precipitation | 752 | 87% |
| Example 9 | 600 | 10 | 1000 | 40 | 0.25 | 400 | No lithium precipitation | No lithium precipitation | 758 | 88% |
| Example 10 | 600 | 10 | 1100 | 40 | 0.25 | 500 | No lithium precipitation | No lithium precipitation | 761 | 80% |
| Example 11 | 600 | 5 | 800 | 45 | 0.11 | 200 | No lithium precipitation | No lithium precipitation | 750 | 84% |
| Example 12 | 600 | 15 | 800 | 35 | 0.43 | 200 | No lithium precipitation | No lithium precipitation | 740 | 88% |
| Example 13 | 600 | 20 | 800 | 30 | 0.67 | 200 | No lithium precipitation | No lithium precipitation | 735 | 85% |
| Example 14 | 600 | 25 | 800 | 25 | 1.00 | 200 | No lithium precipitation | No lithium precipitation | 730 | 83% |
| Comparative example 1 | 600 | 10 | 700 | 40 | 0.25 | 100 | No lithium precipitation | No lithium precipitation | 730 | 82% |
| Comparative example 2 | 450 | 10 | 1000 | 40 | 0.25 | 550 | No lithium precipitation | No lithium precipitation | 740 | 70% |
| Comparative example 3 | 750 | 10 | 1000 | 40 | 0.25 | 250 | No lithium precipitation | Lithium precipitation | 755 | 65% |
| Comparative example 4 | 800 | 10 | 900 | 40 | 0.25 | 100 | No lithium precipitation | Lithium precipitation | 753 | 54% |
| Comparative example 5 | 500 | 10 | 1150 | 40 | 0.25 | 550 | No lithium precipitation | No lithium precipitation | 760 | 70% |
| Comparative example 6 | 800 | 10 | 800 | 40 | 0.25 | 0 | No lithium precipitation | Lithium precipitation | 753 | 65% |

It can be learned from comparison between Examples 1 to 10 and Comparative examples 1 to 6 that, when A ≥ 800°C, B ranges from 500°C to 700°C, and 100°C ≤ A - B ≤ 500°C, no lithium precipitation occurs in the lithium-ion batteries, the energy density remains high, and the cycling capacity retention rate is significantly improved. When the value of A is too small (Comparative example 1), the overall kinetic performance of the negative electrode plate is too high and side reactions are severe, leading to a decrease in the cycling capacity retention rate. When the value of B is too small (Comparative example 2), the energy density of the lithium-ion battery is relatively low, and the cycling capacity retention rate is reduced due to more side reactions. When the value of B is too large (Comparative examples 4 and 6), lithium precipitation is likely to occur. When the value of (B - A) is too large (Comparative examples 2 and 5) or too small (Comparative example 6), the cycling capacity retention rate of the lithium-ion battery is relatively low.

It can be learned from comparison between Examples 3 and 11 to 14 that, as the ratio of the thickness of the second layer to the thickness of the first layer increases, the energy density of the lithium-ion battery tends to decrease, and the cycling capacity retention rate of the lithium-ion battery tends to increase first and then decrease.

The foregoing descriptions are merely preferred examples of this application and explanations of the technical principles used. Persons skilled in the art should understand that the related scope disclosed in this application is not limited to the technical solutions formed by a specific combination of the foregoing technical characteristics, and should also cover other technical solutions formed by any combination of the foregoing technical characteristics or their equivalent characteristics. For example, the technical solution formed by replacement between the foregoing features and technical features having similar functions disclosed in this application.

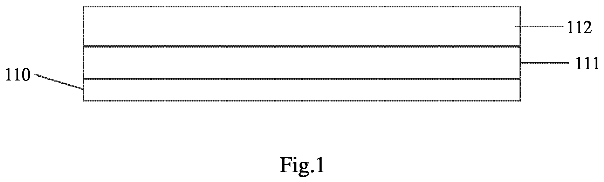

## Claims

1. An electrochemical apparatus, comprising:
a negative electrode plate, wherein the negative electrode plate comprises a negative electrode current collector, a first layer, and a second layer, and the first layer is located between the negative electrode current collector and the second layer;
wherein both the first layer and the second layer comprise graphite; a thermal decomposition temperature of the graphite in the first layer is A, and A is greater than or equal to 800°C; and a thermal decomposition temperature of the graphite in the second layer is B, B ranges from 500°C to 700°C, and 100°C ≤ A - B ≤ 500°C.

2. The electrochemical apparatus according to claim 1, wherein 100°C ≤ A - B ≤ 450°C.

3. The electrochemical apparatus according to claim 1 or 2, wherein the thermal decomposition temperature A of the graphite in the first layer ranges from 800°C to 1000°C.

4. The electrochemical apparatus according to any one of claims 1 to 3, wherein the thermal decomposition temperature A of the graphite in the first layer ranges from 800°C to 900°C.

5. The electrochemical apparatus according to any one of claims 1 to 3, wherein the thermal decomposition temperature A of the graphite in the first layer ranges from 900°C to 1000°C.

6. The electrochemical apparatus according to any one of claims 1 to 5, wherein 200°C ≤ A - B ≤ 400°C.

7. The electrochemical apparatus according to any one of claims 1 to 3, wherein the thermal decomposition temperature B of the graphite in the second layer ranges from 500°C to 650°C, and 100°C ≤ A - B ≤ 400°C.

8. The electrochemical apparatus according to any one of claims 1 to 7, wherein a ratio of a thickness of the second layer to a thickness of the first layer ranges from 0.1 to 1.0.

9. The electrochemical apparatus according to any one of claims 1 to 8, wherein a ratio of a thickness of the second layer to a thickness of the first layer ranges from 0.25 to 0.67.

10. The electrochemical apparatus according to any one of claims 1 to 9, wherein a ratio of a thickness of the second layer to a thickness of the first layer ranges from 0.25 to 0.43.

11. The electrochemical apparatus according to any one of claims 1 to 10, wherein the graphite in the second layer exhibits two decomposition characteristic peaks between 600°C and 900°C in a thermogravimetric test, and the graphite in the first layer exhibits one decomposition characteristic peak between 800°C and 900°C in the thermogravimetric test.

12. The electrochemical device according to any one of claims 1 to 11, wherein the graphite comprises at least one selected from the group consisting of artificial graphite and natural graphite.

13. An electronic apparatus, comprising the electrochemical apparatus according to any one of claims 1 to 12.
